# EUROPÄISCHE PATENTANMELDUNG

(11) **EP 2 327 732 A1**
(43) Veröffentlichungstag der Anmeldung: **01.06.2011**
(21) Anmeldenummer: 09014771.1
(22) Anmeldetag: 27.11.2009
(51) Int. Cl.: C08G 18/08, C08G 18/28, C08G 18/48, C09D 7/12

(54) **Polyurethan-basierte Verdickungsmittel**

(71) Anmelder: Cognis IP Management GmbH, 40589 Düsseldorf (DE)
(72) Erfinder: Münzenberg Cindy, 40239 Düsseldorf (DE); Pietsch Oliver, 45481 Mülheim (DE); Wick Anja, 40723 Hilden (DE); Mahnke Eike Ulf, 42553 Velbert (DE); Birnbrich Paul, 42719 Solingen (DE)

(57) **Zusammenfassung**

Polyurethane erhältlich durch Umsetzung von
(i) ein oder mehreren hydrophilen Polyolen, die pro Molekül mindestens zwei OH-Gruppen und mindestens zwei funktionelle Gruppen, die ausgewählt sind aus den Funktionen -O- (Ethergruppen) und -COO- (Estergruppen), wobei das Molgewicht dieser hydrophilen Verbindungen mindestens 300 beträgt,
(ii) ein oder mehreren Monoalkoholen mit insgesamt 8 bis 36 C-Atomen, mit der Maßgabe, dass es sich bei diesen Monoalkoholen um Guerbet-Alkohole (GA) handelt, die erhältlich sind, indem man als Ausgangsalkohole für die Guerbet-Reaktion zur Herstellung dieser Guerbet-Alkohole (GA) ausschließlich solche Monoalkohole mit 4 bis 18 C-Atomen einsetzt, die ausgewählt sind aus der Gruppe der primären und/oder sekundären Monoalkohole der Formel (MA), 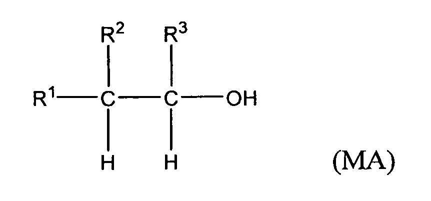 wobei gilt: (a) die Gesamtzahl der C-Atome der Verbindungen (MA) liegt im Bereich von 4 bis 18; (b) die Reste R¹, R² und R³ bedeuten Wasserstoff oder Alkylgruppen, die — unabhängig voneinander ― linear oder verzweigt oder alicyclisch, gesättigt oder ungesättigt sein können; (c) die Reste R¹ und R² und/oder R¹ und R³ und/oder R² und R³ können miteinander verknüpft sein, d.h. Teil einer alicyclischen Substruktur sein; (d) die Verbindungen (MA) weisen mindestens eine Verzweigung auf, und
(iii) ein oder mehreren, mindestens difunktionellen, Isocyanaten,
eignen sich als Verdickungsmittel für wässrige Systeme.

## Beschreibung

### Gebiet der Erfindung

Die Erfindung betrifft Polyurethane spezieller Stuktur und Verdicker-Konzentrate enthaltend diese Polyurethane.

### Stand der Technik

Polyurethanlösungen oder -dispersionen in wasserverdünnbarer wäßriger oder überwiegend wäßriger Phase werden vom Fachmann als HEUR-Verdicker bezeichnet (das Akronym HEUR leitet sich von "nonionic hydrophobically modified ethylene oxide urethane block copolymer" ab) und bereits seit längerem in den unterschiedlichsten Anwendungsfeldern zur Verdickung wasserbasierter Dispersionsfarben eingesetzt.

Die bereits Ende der 70er Jahre in US-A-4,079,028 beschriebenen Verdickungsmittel vom HEUR-Typ sind aufgebaut aus linearen und/oder verzweigten Polyethylenglycolblöcken und Hydrophobsegmenten, die in der Regel über Urethangruppen (bei Verwendung von Aminen statt Alkoholen resultieren Harnstoffgruppen) miteinander verknüpft sind.

Als Wirkprinzip für die verdickende Wirkung der HEUR-Verdicker wird angenommen, dass die Polyethylenglykolsegmente die Wasserverträglichkeit sicherstellen und die Hydrophobsegmente über eine Assoziation untereinander sowie mit dispergierten Bindemittelteilchen der zu verdickenden Dispersionsfarbe in dieser einen viskositätsgebenden dreidimensionalen Molekülverbund aufbauen.

Bevorzugte hydrophobe Bausteine in marktüblichen HEUR-Verdickern sind längerkettige, in der Regel monofunktionelle Alkohole, wie beispielsweise n-Octanol, n-Dodecanol, iso-Tridecylalkohol, iso-Nonylphenol oder Ricinolsäuremethylester. Diese Alkohole kommen überwiegend als solche, aber auch in Form ihrer Additionsprodukte mit einigen wenigen Äquivalenten Ethylenoxid zum Einsatz. Die in marktüblichen HEUR-Verdickern überwiegend verwendeten mehrfunktionellen Isocyanat-Bausteine sind in der Regel difunktionell. Beispielsweise kommen Methylenbis-(4-cyclohexyl)diisoyanat, m/p-Tetramethylenxylylendiisocyanat, Hexamethylendiisocyanat, 2,4-Toluylendisocyanat, Trimethylhexamethylendiisocyanat oder 4/2,4'-Diphenylmethandiisocyanat zum Einsatz. Die in marktüblichen HEUR-Verdickern verwendeten Polyethylenglycol-Bausteine sind in der Regel ebenfalls difunktionell und weisen Molekulargewichte im Bereich einiger Tausend Dalton, beispielsweise 4500 oder 10000 Dalton, auf.

Die Einsatzverhältnisse der einzelnen Bausteine von HEUR-Verdickern - seien es nun verzweigte oder unverzweigte Polyethylenglykole, mono- oder mehrfunktionelle Hydrophobalkohole, vorethoxylierte mono- oder mehrfunktionelle Hydrophobalkohole, kettenverlängernd eingesetzte di- oder mehrfunktionelle kurzkettige Alkohole - werden in der Regel so gewählt, dass jedem noch über eine Hydroxylgruppen reaktiven Ethylenglykolsegmentende jeweils ein Hydrophobalkohol zur Verfügung steht.

Die hydroxylterminierten Synthesebausteine von HEUR-Verdickern werden durch Reaktion mit di- oder mehrfunktionellen Isocyanaten miteinander verbunden, wobei die Equivalenteinsatzverhältnisse der miteinender zur Additionsreaktion zu bringenden Isocyanat- sowie der "H-aciden" Gruppen (in der Regel OH-Gruppen; es sind aber auch NH₂-Gruppen möglich) so gewählt werden, dass jedem "H-aciden"Gruppenäquivalent, also in der Regel jeder OH-Gruppe mindestens geringfügig weniger als ein Isocyanatgruppenäquivalent gegenüber steht. Mit anderen Worten: Das Äquivalentverhältnis OH : NCO wird in der Regel auf einen Wert von mindestens 1 : 1 eingestellt, wobei idealerweise 1 : 1 angestrebt wird oder die OH-Gruppen im Vergleich zu den NCO-Gruppen um 5-10% überwiegen (was einem Äquivalentverhältnis von OH : NCO im Bereich von 1,05 : 1 bis 1,1 : 1 entspricht), um sicherzustellen, dass das Endprodukt (der HEUR-Verdicker) keine freien NCO-Gruppen enthält, die unerwünscht sind, einerseits aus toxikologischen Gründen, andererseits weil sie beim späteren Einsatz in zu verdickenden Rezepturen unerwünschte Folgereaktionen mit Rezepturbestandteilen eingehen können. Dieses Grundprinzip, daß nämlich bei der Herstellung von HEUR-Verdickern die OH-Gruppen der Polyethylenglykol- und Hydrophobalkohol-Bausteine im Vergleich zu den NCO-Gruppen der Isocyanat-Bausteine mit ca. 5-10% leicht überwiegen,ist auch bereits Bestandteil der Lehre der oben genannten US-A-4,079,028 (vergleiche dort Spalte 3, Zeilen 17 ff).

EP-B-905175 beschreibt spezielle Polyurethan-Verdicker die als Bausteine Isocyanate, Polyetherpolyole und capping agents enthalten, wobei letztere eine ganz spezielle, durch eine Formel näher umschriebene, Struktur aufweisen. Diese Struktur zeichnet sich dadurch aus, dass das capping agent einen Monoalkohol darstellt, dessen Struktur an einem einzigen C-Atom verzweigt ist. In Abschnitt [0040] wird insbesondere die Isofol-Linie verzweigter Alkohole der Firma Condea als Beispiel für geeignete capping agents ausgeführt. Dabei handelt es sich wie der Fachmann weiß, um so genannte Guerbet-Alkohole, die durch Dimerisierung linearer Alkohole zugänglich sind. Strukturell weisen diese Guerbet-Alkohole eine einzige Verzweigung pro Molekül auf.

Guerbet-Alkohole sind spezielle verzweigte Alkohole. Es handelt sich um primäre Alkohole, die in beta-Stellung zur CH₂OH-Gruppe verzweigt sind. Guerbet-Alkohole sind dem Fachmann bekannt, manche sind seit langem kommerziell erhältlich. Sie werden durch die so genannte Guerbet-Reaktion gewonnen, eine seit etwa 100 Jahren bekannte Dimerisierungs-Reaktion, die durch folgendes Formelschema (R* bedeutet darin eine aliphatische Gruppe) umschrieben werden kann:

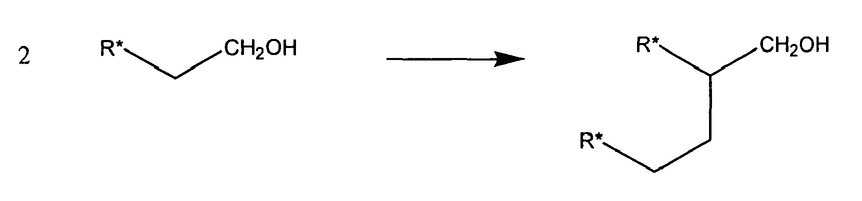

Im Rahmen der klassischen Guerbet-Reaktion wird ein primärer oder sekundärer Alkohol in einen primären Alkohol etwa doppelten Molekulargewichts überführt, der in beta-Position zum C-Atom, das die OH-Gruppe trägt, alkyliert ist. So wird etwa n-Butanol in 2-Ethyl-hexan-1-ol überführt, Hexan-1-ol in 2-Butyloctan-1-ol und Octan-1-ol in 2-Hexyl-dodecan-1-ol.

Die für die Guerbet-Reaktion eingesetzten primären oder sekundären Alkohole tragen an dem C-Atom, das dem C-Atom mit der OH-Gruppe unmittelbar benachbart ist, mindestens ein Wasserstoffatom - in vielen Fällen tragen sie zwei Wasserstoffatome, d.h. dem C-Atom mit der OH-Gruppe ist dann eine Methylengruppe unmittelbar benachbart.

Die Guerbet-Reaktion verläuft typischerweise in Gegenwart einer Base bei erhöhter Temperatur unter Wasserabspaltung und stellt eine einfache Möglichkeit dar, lineare Alkohole in verzweigte Alkohole zu überführen. Typischerweise setzt man nur einen einzigen Alkohol bei der Guerbet-Reaktion ein. Es ist jedoch auch möglich, zwei unterschiedliche Alkohole einzusetzen; in diesem Falle spricht man von einer gemischten Guerbet-Reaktion.

Im obigen Formelschema bedeuten die Reste R* jeweils eine aliphatische Gruppe. Typischerweise handelt es sich um eine lineare und gesättigte aliphatische Gruppe, d.h. man setzt etwa Fettalkohole wie Octanol oder Decanol als Ausgangs-Alkohole für die Guerbet-Reaktion ein. Bisweilen handelt es sich bei R* um eine gesättigte cycloaliphatische Gruppe, d.h. man setzt etwa Alkohole wie Cyclopentanol oder Cyclohexanol als Ausgangs-Alkohole für die Guerbet-Reaktion ein.

### Beschreibung der Erfindung

Aufgabe der Erfindung war es, Verdickungsmittel auf Polyurethanbasis bereitzustellen, die gegenüber den Polyurethanverdickungsmitteln aus dem Stand der Technik bei vergleichsweise geringerer Eigenviskosität der Verdickungsmittel in ihrer Konfektionierungsform bei gleicher Menge eine erhöhte Viskosität des verdickten Produkts erreicht werden. Außerdem sollten die Verdickungsmittel gewünschtenfalls ohne die Verwendung von flüchtigen organischen Lösungsmitteln herstellbar sein.

Gegenstand der vorliegenden Erfindung sind zunächst Polyurethane erhältlich durch Umsetzung von
(i) ein oder mehreren hydrophilen Polyolen, die pro Molekül mindestens zwei OH-Gruppen und mindestens zwei funktionelle Gruppen, die ausgewählt sind aus den Funktionen -O- (Ethergruppen) und -COO- (Estergruppen), wobei das Molgewicht dieser hydrophilen Verbindungen mindestens 300 beträgt,
(ii) ein oder mehreren Monoalkoholen mit insgesamt 8 bis 36 C-Atomen, mit der Maßgabe, dass es sich bei diesen Monoalkoholen um Guerbet-Alkohole (GA) handelt, die erhältlich sind, indem man als Ausgangsalkohole für die Guerbet-Reaktion zur Herstellung dieser Guerbet-Alkohole (GA) ausschließlich solche Monoalkohole mit 4 bis 18 C-Atomen einsetzt, die ausgewählt sind aus der Gruppe der primären und/oder sekundären Monoalkohole der Formel (MA), 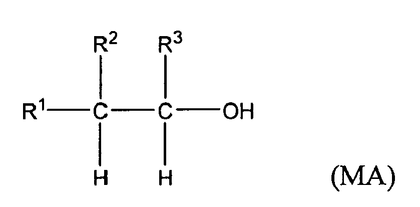 wobei gilt: (a) die Gesamtzahl der C-Atome der Verbindungen (MA) liegt im Bereich von 4 bis 18; (b) die Reste R¹, R² und R³ bedeuten Wasserstoff oder Alkylgruppen, die ― unabhängig voneinander ― linear oder verzweigt oder alicyclisch, gesättigt oder ungesättigt sein können; (c) die Reste R¹ und R² und/oder R¹ und R³ und/oder R² und R³ können miteinander verknüpft sein, d.h. Teil einer alicyclischen Substruktur sein; (d) die Verbindungen (MA) weisen mindestens eine Verzweigung auf, und
(iii) ein oder mehreren, mindestens difunktionellen, Isocyanaten.

### Zu den Polyolen (i)

Die hydrophilen Polyole (i) enthalten per definitionem pro Molekül mindestens zwei OH-Gruppen und mindestens zwei funktionelle Gruppen, die ausgewählt sind aus den Funktionen -O- (Ethergruppen) und -COO- (Estergruppen), wobei das Molgewicht dieser hydrophilen Verbindungen mindestens 300 und vorzugsweise mindestens 1000 beträgt. Bei den Polyolen (i) handelt es sich mithin um den hydrophilen Molekülbaustein der erfindungsgemäßen Polyurethane vom Typ HEUR. Ausdrücklich sei darauf hingewiesen, dass sich die Verbindungen (i) grundsätzlich von denjenigen Verbindungen (b) unterscheiden, die nicht hydrophil, sondern hydrophob sind.

Als Verbindungen (i) sind beispielsweise die Polymerisationprodukte des Ethylenoxids, deren Misch- oder Pfropfpolymerisationsprodukte sowie die durch Kondensation von mehrwertigen Alkoholen oder Mischung derselben und die durch Ethoxylierung von mehrwertigen Alkoholen, Amiden, Polyamiden und Aminoalkoholen gewonnenen Polyether geeignet. Beispiele geeigneter Verbindungen (i) sind etwa Polyethylenglykole, Anlagerungsprodukte von Ethylenoxid an Trimethylolpropan, EO-PO-Blockcopolymere, OH-terminierte Polyester wie beispielsweise solche vom Typ der mehrfunktionellen Polycaprolactone.

Bevorzugte Verbindungen (i) sind Polyetherpolyole. Dies sind solche hydrophilen Polyole (i), die pro Molekül mindestens zwei OH-Gruppen und mindestens zwei Funktionen -O- (Ethergruppen) enthalten. Diese Polyetherpolyole sind in aller Regel so stark hydrophil, dass sie wasserlöslich sind.

Zur Herstellung der erfindungsgemäßen Polyurethane eignen sich bevorzugt solche Polyetherpolyole, die zumindestens überwiegend Polyethylenglykol enthalten. Besonders gute Ergebnisse werden erzielt, wenn diese Polyethenglykole einen mittleren Gehalt an Alkoxyeinheiten im Bereich von 20 bis 400 aufweisen. Bevorzugt sind als Verbindungen (i) Diole der allgemeinen Formel HO-(CH₂-CH₂-O)ₓ-H, wobei x die Werte 30 bis 300 annehmen kann. Hierbei handelt es sich um Polyethylenglykole, die Kondensationsprodukte des Ethylenoxids mit Ethylenglykol oder Wasser darstellen. Vorzugsweise stellt man das Molgewicht dieser Polyethylenglykole auf Werte im Bereich von 2000 bis 20.000 ein. Polyethylenglykole mit einem Molgewicht im Bereich von 4.000 bis 10.000 sind als Verbindungen (i) besonders bevorzugt.

### Zu den Monoalkoholen (ii)

Bei Komponente (i) handelt es sich Monoalkohole mit insgesamt 8 bis 36 C-Atomen, mit der Maßgabe, dass es sich bei diesen Monoalkoholen um Guerbet-Alkohole (GA) handelt, die erhältlich sind, indem man als Ausgangsalkohole für die Guerbet-Reaktion zur Herstellung dieser Guerbet-Alkohole (GA) ausschließlich solche Monoalkohole mit 4 bis 18 C-Atomen einsetzt, die ausgewählt sind aus der Gruppe der primären und/oder sekundären Monoalkohole der Formel (MA), 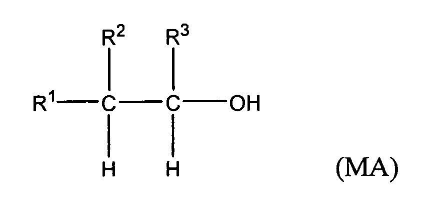 wobei gilt: (a) die Gesamtzahl der C-Atome der Verbindungen (MA) liegt im Bereich von 4 bis 18; (b) die Reste R¹, R² und R³ bedeuten Wasserstoff oder Alkylgruppen, die ― unabhängig voneinander ― linear oder verzweigt oder alicyclisch, gesättigt oder ungesättigt sein können; (c) die Reste R¹ und R² und/oder R¹ und R³ und/oder R² und R³ können miteinander verknüpft sein, d.h. Teil einer alicyclischen Substruktur sein; (d) die Verbindungen (MA) weisen mindestens eine Verzweigung auf.

Was Guerbet-Alohole und die zu ihrer Herstellung angewandte Guerbet-Reaktion sind, ist dem Fachmann bekannt und wichtige Punkte hierzu wurden im Kapitel zum Stand der Technik bereits ausgeführt (siehe oben). Wie aus dem in diesem Zusammenhangdargestellten Formelschema (siehe oben) hervorgeht, besteht die Guerbet-Reaktion im Endeffekt darin, zwei Moleküle Ausgangsalkohol in einer Kondensationsreaktion miteinander zu verknüpfen, wobei das resultierende Molekül, also der Guerbet-Alkohol an derjenigen Stelle, wo die beiden ursprünglichen Ausgangs-Alkohol-Bausteine miteinander verknüpft sind, eine Verzweigung im Molekül enthält. Sofern R* im obigen Formelschema eine lineare aliphatische Gruppe ist oder eine cycloaliphatische Gruppe, enthält der resultierende Guerbet-Alkohol lediglich eine Verzweigung im Molekül. Sofern jedoch R* im obigen Formelschema eine Gruppe ist, die eine Verzweigung enthält, dann enthält der resultierende Guerbet-Alkohol drei Verzweigungen im Molekül, nämlich eine, die aus der Verknüpgungsreaktion (= der Guerbet-Reaktion) resultiert und zwei, die aus den eingesetzten Ausgangs-Alkoholen stammen. Für das Verständnis der vorliegenden Erfindung ist es essentiell, dass die Monoalkohole (MA) mindestens eine Verzweigung aufweisen müssen; dies ist durch die obige Bedingung (d) unmissverständlich ausgedrückt.

Vorzugsweise sind dabei die Alkylgruppen der Verbindungen (MA) ausschließlich gesättigt.

Bei den Verbindungen (MA), deren Alkylreste ausschließlich gesättigt sind, gilt in einer bevorzugten Ausführungsform, dass die Gesamtzahl ihrer C-Atome im Bereich von 5 bis 10 liegt. Dabei sind Alkohole mit 5 C-Atomen und insbesondere Isomerengemische von Alkoholen mit 5 C-Atomen besonders bevorzugt.

3-Methyl-butan-1-ol ist als Monoalkohol (MA) ganz besonders bevorzugt. Er kann in reiner Form oder in Form technischer Mischungen und auch in Abmischung mit anderen Alkoholen der Formel (MA) als Ausgangs-Alkohol eingesetzt werden. Durch Guerbetreaktion entsteht beim Einsatz von 3-Methyl-butan-1-ol als Monoalkohol (MA) der folgende Guerbetalkohol (GA*) 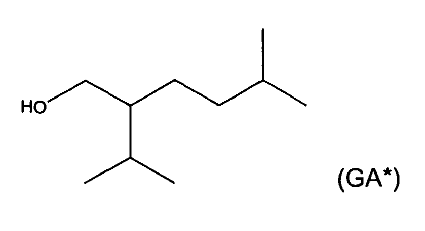 der als 2-Isopropyl-5-Methyl-hexan-1-ol bezeichnet werden kann.

Die Verbindungen (MA) können in reiner Form oder in Form technischer Produkte eingesetzt werden. Es ist auch möglich Mischungen für die erfindungsgemäß durchzuführende Guerbetreaktion einzusetzen, die im wesentlichen ein oder mehrere Verbindungen (MA) neben weiteren Substanzen ― wobei unverzweigte aliphatische Alkohole als weitere Substanzen ausgeschlossen sind ― enthalten.

Bekanntlich bezeichnet man an N, O oder S gebundenen Wasserstoff dann als Zerewitinoff-aktiven Wasserstoff (manchmal auch nur als "aktiven Wasserstoff"), wenn er nach einem von Zerewitinoff aufgefundenen Verfahren durch Umsetzung mit Methylmagnesiumjodid Methan liefert. Da die Verbindungen (ii) Guerbet-Alkohole (GA) sind und mithin eine OH-Gruppe enthalten, so enthalten sie eben wegen dieser OH-Gruppe auch Zerewitinoff-aktiven Wasserstoff.

### Zu den Isocyanaten (iii)

Als mindestens difunktionelle Isocyanate (iii) sind alle mehrfunktionellen aromatischen, alicyclischen und aliphatischen Isocyanate geeignet. Vorzugweise enthalten die geeigneten mehrfunktionellen Isocyanate im Mittel 2 bis höchstens 4 NCO- Gruppen. Diisocyanate sind als Verbindungen (iii) bevorzugt.

Beispielsweise seien als geeignete Isocyanate genannt 1,5- Naphthylendiisocyanat, 4,4'-Diphenylmethandiisocyanat (MDI), hydriertes MDI (H₁₂MDI), Xylylendiisocyanat (XDI), Tetramethylxyloldiisocyanat (TMXDI), 4,4'- Diphenyldimethylmethandiisocyanat, Di- und Tetraalkyldiphenylmethandiisocyanat, 4,4'-Dibenzyldiisocyanat, 1,3-Phenylendiisocyanat, 1,4- Phenylendiisocyanat, die Isomeren des Toluylendiisocyanats (TDI), gegebenenfalls in Mischung, 1-Methyl-2,4-diisocyanato-cyclohexan, 1,6- Dii-socyanato-2,2,4-trimethylhexan, 1,6-Diisocyanato-2,4,4-trimethylhexan, 1-Isocyanatomethyl-3-isocyanato-1,5,5-trimethyl-cyclohexan, chlorierte und bromierte Diisocyanate, phosphorhaltige Diisocyanate, 4,4'- Diisocyanatophenylperfluorethan, Tetramethoxybutan-1,4-diisocyanat, Butan- 1,4-diisocyanat, Hexan-1,6-diisocyanat (HDI), Dicyclohexylmethandiisocyanat, Cyclohexan-1,4-diisocyanat, Ethylen- diisocyanat, Phthalsäure-bis-isocyanatoethylester, ferner Polyisocyanate mit reaktionsfähigen Halogenatomen, wie 1-Chlormethylphenyl-2,4-diisocyanat, 1-Brommethylphenyl-2,6-diisocyanat, 3,3-Bis-chlormcthylether-4,4'-diphenyldiisocyanat. Schwefelhaltige Polyisocyanate erhält man beispielsweise durch Umsetzung von 2 mol Hexamethylendiisocyanat mit 1 mol Thiodiglykol oder Dihydroxydihexylsulfid. Weitere wichtige Diisocyanate sind Trimethylhexamethylendiisocyanat, 1,4-Diisocyanatobutan, 1,2-Diisocyanatododecan und Dimerfettsäure-diisocyanat. Interesse verdienen teilweise verkappte Polyisocyanate, welche die Bildung selbstvernetzender Polyurethane ermöglichen, z.B. dimeres Toluylendiisocyanat, oder mit beispielsweise Phenolen, tertiärem Butanol, Phthalimid, Caprolactam partiell umgesetzte Polyisocyanate.

Erfindungsgemäß bevorzugt ist es, dass die zur Herstellung der Polyurethane eingesetzten Isocyanate (iii) zumindest überwiegend Isophorondiisocyanat (IPDI) und/oder Tetramethylxyloldiisocyanat (TMXDI) enthalten. Vorzugsweise wird Komponente (iii) ausschließlich gewählt aus der Gruppe Isophorondiisocyanat (IPDI) und Tetramethylxyloldiisocyanat (TMXDI).

In einer bevorzugten Ausführungsform werden Isocyanate mit einer Funktionalität von 2 (difunktionelle Isocyanate) eingesetzt.

In einer anderen Ausführungsform werden — anteilsweise oder ganz - Isocyanate mit einer Funktionalität oberhalb von 2 eingesetzt, wenn nämlich gewünscht ist, Polyurethane mit verzweigter Struktur herzustellen.

### Spezielle Äquivalentverhältnisse

In einer Ausführungsform gilt, dass die Verbindungen (i), (ii) und (iii) in den Äqivalentverhältnissen OHᵢ₎ : ZHᵢᵢ₎ : NCOᵢᵢᵢ) von 1 : (1+x) : 2(1+y) miteinander umgesetzt werden, mit den Maßgaben, dass folgende Bedingungen gelten:
● x ist eine Zahl im Bereich von 0,05 bis 1,2 und
● y ist eine Zahl im Bereich von (0,2 bis 1,05) x und
● Äquivalentverhältnis NCOᵢᵢᵢ) > (OHᵢ) + ZHᵢᵢ₎)

Der Ausdruck OHᵢ) bezeichnet die primären (terminalen) OH-Gruppen der Verbindungen (i). Der Ausdruck ZHᵢᵢ₎ bezeichnet die gegenüber NCO-Gruppen reaktiven funktionellen Gruppen mit Zerewitinoff-aktivem Wasserstoffatom (ii). Der Ausdruck NCOᵢᵢᵢ) bezeichnet die Isocyanatgruppen der Verbindungen (iii).

Im Rahmen der vorliegenden Erfindung handelt es sich bei den Äquivalenten der Verbindungen (i) um OH-Äquivalente, bei den Verbindungen (ii) um Zerewitinoff-aktive-Wasserstoff-Äquivalente und bei den Verbindungen (iii) um NCO-Äquivalente.

Obwohl der Begriff des Äquivalents dem Fachmann auf dem hier in Rede stehenden Gebiet der Polyurethanchemie geläufig ist, sei nachstehend der Klarheit halber dargestellt, was darunter zu verstehen ist.

Der Ausdruck Äquivalente ist im üblichen Sinne zu verstehen und fokussiert auf die zur Verfügung stehenden reaktiven Gruppen von Molekülen. So enthält beispielsweise 1 mol eines Monoalkohols 1 mol an OH-Gruppen; 1 mol eines Diols enthält 2 mol an OH-Gruppen, 1 Mol eines Triols enthält drei mol an OH-Gruppen, usw. Ganz analog enthält 1 mol eines Diisocyanates (NCO-Funktionalität = 2) 2 mol an NCO-Gruppen, ein mol eines Polyisocyanatgemisches mit einer (mittleren) Funktionalität von 2,3 enthält durchschnittlich 2,3 mol an NCO-Gruppen, usw. Will man beispielsweise Alkohole und Isocyanate miteinander derart umsetzen, dass die eingesetzten Verbindungen bezogen auf die OH- bzw. NCO-Gruppen in bestimmten Verhältnissen stehen sollen, so empfiehlt es sich, anstelle von Gewichts- oder Molverhältnissen auf die Verhältnisse der reaktiven Gruppen abzustellen. Dieses OH : NCO-Verhältnis bezeichnet man als das Äquivalentverhältnis.

Allgemein ausgedrückt ist das Äquivalentverhältnis das Zahlenverhältnis definierter reaktiver Gruppen in den eingesetzten Reaktanden.

Der Anschaulichkeit halber sei zusätzlich durch ein praktisches Beispiel erläutert, wie man ein Äquivalentverhältnis auf einfache Weise ermittelt. Setzt man beispielsweise im Sinne einer Ausführungsform der erfindungsgemäßen Lehre
● 1 mol eines Polyethylenglykols (i) (PEG, OH-Funktionalität = 2) mit zwei OH-Gruppen pro Molekül mit
● 4 mol eines Hydrophobalkohols (ii) (OH-Funktionalität =1) mit einer OH-Gruppe pro Molekül und
● 4 mol eines Diisocyanates (iii) (NCO-Funktionalität = 2)
   zum Polyurethan um, dann enthält
● das eingesetzte PEG (i) 2 mol OH-Gruppen,
● der eingesetzte Hydrophobalkohol (ii) 4 mol OH-Gruppen und
● das eingesetzte Diisocyanat (iii) 8 mol NCO-Gruppen.

Das Zahlenverhältnis der OH-Gruppen des Polyethylenglykols zu den OH-Gruppen des Hydrophobalkohols zu den NCO-Gruppen des Diisocyanats beträgt mithin 2 : 4 : 8 oder 1:2:4.

Oder umgekehrt: Will man beispielsweise die gerade genannten Komponenten (PEG, Hydrophobalkohol und Diisocyanat) in einem Äquivalentverhältnis von 1 : 3 : 3 umsetzen, dann hat man Polyethylenglykol, Hydrophobalkohol und Diisocyanat in einem Molverhältnis von 0,5 : 3 : 1,5 oder 1 : 6 : 3 einzusetzen.

Vorzugsweise ist x ist eine Zahl im Bereich von 0,2 bis 1,0 und insbesondere im Bereich von 0,5 bis 1,0.

Der Klarheit und Eindeutigkeit halber sei ausdrücklich festgestellt, daß sich y durch Multiplikation ergibt. Der für y angegebene Ausdruck, nämlich "(0,2 bis 1,05) x" bedeutet mithin, daß x — wofür eine Zahl aus dem für x angegebenen Bereich einzusetzen ist ― mit einer Zahl aus dem Bereich 0,2 bis 1,05 zu multiplizieren ist.

Vorzugsweise ist y ist eine Zahl im Bereich von (0,4 bis 1,0) x und insbesondere im Bereich von (0,6 bis 1,0) x.

In einer bevorzugten Ausführungsform ist x eine Zahl im Bereich von 0,2 bis 1,0 und y eine Zahl im Bereich von (0,4 bis 1,0) x.

In einer weiteren bevorzugten Ausführungsform ist x eine Zahl im Bereich von 0,5 bis 1,0 und y eine Zahl im Bereich von (0,4 bis 1,0) x.

### Optionale Polyurethan-Bausteine

Wie bereits ausgeführt, sind die Bausteine (i), (ii) und (iii) für die erfindungsgemäßen Polyurethane obligatorisch.

In einer Ausführungsform sind die erfindungsgemäßen Polyurethane erhältlich durch Umsetzung die Verbindungen (i), (ii), (iii) und (iv), wobei es sich bei den Verbindungen (iv) um Polyole mit mindestens zwei OH-Gruppen pro Molekül handelt, die ausser den OH-Gruppen keine weiteren funktionellen Gruppen enthalten.

Alkohole mit einer Funktionalität von 2 bis 4 sind als ― optionale - Verbindungen (iv) besonders geeignet. Ausdrücklich sei festgestellt, dass es sich bei den Verbindungen (iv) um mehrfunktionelle Alkohole handelt, die neben den OH-Gruppen keine weiteren funktionellen Gruppen enthalten. Insbesondere sei darauf hingewiesen, dass hier keine Überschneidung etwa mit den Polyetherpolyolen (i) vorliegt, die zwar ebenfalls mehrere OH-Gruppen enthalten, jedoch zwingend zusätzlich Gruppierungen -O- (Ethergruppen). Mithin sind die Verbindungen (iv) von den Verbindungen (i) verschieden.

In einer Ausführungsform setzt man Alkohole mit einer Funktionalität von 2 als Verbindungen (iv) ein, also Diole, insbesondere Diole mit terminalen OH-Gruppen. Will man Verzweigungen beim Aufbau des Polyurethanmoleküls herbeiführen, so sind zumindest trifunktionelle Alkohole als Verbindungen (iv) einzusetzen. Vorzugsweise enthalten dann die Polyole (iv) zumindest überwiegend trifunktionelle Alkohole, wie beispielsweise Glycerin. Als trifunktioneller Alkohol ist im Sinne der Erfindung Trimethylolpropan (TMP) als Polyol (iv) bevorzugt. Es können jedoch auch Verzweigungen beim Aufbau des Polyurethanmoleküls durch den Einsatz von Isocyanaten mit einer höheren Funktionalität als 2 erreicht werden. Hier sind Triisocyanate bevorzugt. Zur Optimierung der anwendungstechnischen Eigenschaften der Verdickungsmittel ist es sinnvoll, derartige Verzweigungsstellen innerhalb des Polyurethanmoleküls auf einen bestimmten Bereich zu beschränken.

In einer Ausführungsform sind die Polyurethane erhältlich durch Umsetzung die Verbindungen (i), (ii), (iii), (iv) und (v), wobei es sich bei den Verbindungen (v) um Monoalkohole handelt, die von den Verbindungen (ii) verschieden sind. Vorzugsweise wählt man die Monoalkohole (v) aus der Gruppe der Guerbet-Alkohole mit 10 bis 24 C-Atomen, die höchstens zwei Verzweigungen pro Molekül aufweisen und der Oxoalkohole.

### Verdickerkonzentrate

Verdicker-Konzentrate, enthaltend ein oder mehrere der oben beschriebenen erfindungsgemäßen Polyurethane und Wasser. Um unnötige Wiederholungen zu vermeiden sei ausdrücklich klargestellt, dass unter den "oben beschriebenen erfindungsgemäßen Polyurethanen" alle oben beschriebenen Polyurethane einschließlich deren speziellen Ausführungsformen zu verstehen sind.

In einer Ausführungsform enthalten diese Verdicker-Konzentrate zusätzlich ein oder mehrere organische Lösungsmittel (L) und/oder nichtionische Tenside (T) vom Typ der Anlagerungsverbindungen von Ethylen- und/oder Propylenoxid an Fettalkohole mit 4 bis 18 C-Atomen enthalten.

Bei den Lösungsmitteln (L) handelt es sich um flüchtige organische Lösungsmittel. Beispiele hiefür sind niedermolekulare Alkohole wie Methanol, Ethanol, n-Propanol, i-Propanol, n-Butanol, i-Butanol, sec-Butanol, Ethandiol, Propandiol, Butandiol, Glycerin, Trimethylolpropan in Betracht.

Als nichtionische Tenside (T) vom Typ der Anlagerungsverbindungen von Ethylen-und/oder Propylenoxid an Alkohole mit 4-18 C-Atomen sind solche mit 2 bis 4 Mol Ethylenoxid pro mol Alkohol bevorzugt. Das Kohlenstoffgerüst der Alkohole kann dabei gesättigt oder ungesättigt, linear oder verzweigt sein. Als Beispiel einer geeigneten Verbindung (C) dieser Klasse sei etwa Dehydol 04 (Handelsprodukt der Fa. Cognis) genannt, ein Anlagerungsprodukt von 4 mol Ethylenoxid an 1 mol Octanol.

### Verwendung

Des weiteren betrifft die Erfindung die Verwendung der erfindungsgemäßen Polyurethane beziehungsweise der erfindungsgemäßen Verdicker-Konzentrate zur Verdickung wäßriger Systeme, bevorzugt wäßriger Dispersionen, ausgewählt aus der Gruppe bestehend aus wäßrigen Kraftfahrzeug- und Industrielacken, Druck- und Textilfarben, Pigmentdruckpasten, wäßrigen pharmazeutischen Formulierungen, kosmetischen Formulierungen oder pharmazeutisch-kosmetischen Formulierungen, Pflanzenschutzformulierungen, Füllstoff- und Pigmentdispersionen, Zubereitungen von Waschmitteln, Klebstoffen, Wachsen und Polituren sowie für die Erdölförderung, insbesondere zur Verdickung von wäßrigen Putz- und Anstrichfarben in Dispersionsform.

### Verwendete Abkürzungen

- PEG 8000:: Pluriol E 8000 (Polyethylenglykol der Fa. BASF)
- IPDI:: Isophorondiisocyanat (IPDI, Fa. Degussa/Hüls)
- C10-V3-OH: 3-fach-verzweigter Alkohol mit 10 C-Atomen, der wie folgt durch Guerbet-Reaktion aus 3-Methyl-1-butanol in Gegenwart von katalytischen Mengen Aldehyd, Alkali und Palladium auf Kohle hergestellt wurde: Ein Reaktionsgemisch aus 2500g 3-Methyl-1-Butanol, 75g 3-Methyl-1-Butanal, 4 g Pd/C (5% Pd/C 3610 von der Firma Johnson Matthey in 50% Wasser) wurde auf 180°C aufgeheizt, 320g KOH (50%ig) portionsweise zudosiert und mit einer Druckrampe von 4,6 auf 1,4 bar 18 Stunden unter Rühren gefahren.
- Exxal 11: Isodecylalkohol (oxomethyliertes Propentrimer; Handelsprodukt "Exxal 10" der Firma Exxon Mobil Chemical)
- C10-V2-OH: 2-Propylheptanol (Fa. Bayer; 1-fach verzweigter Alkohol mit 10 C-Atomen)
- Nonanol: 3,5,5-Trimethylhexanol (Fa. Kyowa)
- Dehydol 04: Anlagerungsprodukt von 4 mol Ethylenoxid an 1 mol n-Octanol ("Dehydol 04 deo"; Fa. Cognis)
- VE-Wasser: vollentsalztes Wasser
- NeoCryl XK 98: Acrylemulsion (Fa. DSM NeoResins)
- Dehydran 1513: Gemisch aus Polymeren, Emulgatoren und Silikon (Fa. Cognis)

### Polyurethanherstellung

### Beispiel 1 (B1):

Im 1L-Vierhalskolben wurden 198 g (24 mmol) PEG 8000 vorgelegt. Es wurde zweimal evakuiert und mit Stickstoff belüftet. Anschließend wurde Vakuum angelegt und der Ansatz auf 100°C erhitzt. Bei dieser Temperatur wurde bei einem Vakuum von mindestens 10 mbar über einen Zeitraum von zwei Stunden entwässert. Dann wurde mit Stickstoff belüftet und im weiteren Verlauf die Schutzgasatmosphäre durch einen leichten Stickstoffstrom aufrechterhalten. Über die gesamte folgende Reaktionszeit wurde mit einer Rüherdrehzahl von 120 Upm gerührt. Danach wurden nacheinander 11,40 g C10-V3-OH (72 mmol) und 16,0 g Isophorondiisocyanat (72 mmol) zugegeben. Die Reaktionstemperatur wurde während der Zugabe und während der folgenden Reaktionszeit bei 110°C gehalten. Sobald kein Restisocyanat mehr nachweisbar war (dies war nach ca. 60 Minuten Gesamtreaktionszeit der Fall), wurde die Temperatur bei 110°C gehalten und 134,1g Dehydol 04 zugesetzt. Diese Mischung wurde bis zur Homogenität gerührt. Anschließend wurden unter Rühren 317,2 g VE-Wasser zugesetzt. Nachdem dass Produkt abgekühlt war, wurden ca. 652,5 g einer viskosen, klaren, leicht gelblichen Polymerlösung aus dem Reaktionsgefäß isoliert.

Der Trockenrückstand (zu dessen Bestimmung ca. 2 g der wie oben beschrieben hergestellten Polymerlösung in einem 10 cm Aluschälchen bei 105°C über 1,5 h im Umlufttrockenschrank getrocknet wurden) betrug 51,3 Gew.-% und die Brookfield-Viskosität 5600 mPas (Brookfield RVT-Viskosimeter/Spindel 3/10 Upm/23°C). Die Lackviskosität im Epprecht Viskosimeter betrug 220 mPas (Spindel C).

### Beispiel 2 (B2):

Im 1L-Vierhalskolben wurden 198 g (24 mmol) PEG 8000 (Polyethylenglykol der BASF) vorgelegt. Es wurde zweimal evakuiert und mit Stickstoff belüftet. Anschließend wurde Vakuum angelegt und der Ansatz auf 100°C erhitzt. Bei dieser Temperatur wurde bei einem Vakuum von mindestens 10 mbar über einen Zeitraum von zwei Stunden entwässert. Dann wurde mit Stickstoff belüftet und im weiteren Verlauf die Schutzgasatmosphäre durch einen leichten Stickstoffstrom aufrechterhalten. Über die gesamte folgende Reaktionszeit wurde mit einer Rüherdrehzahl von 120 Upm gerührt. Danach wurden nacheinander 3,3 g Exxal 11 (19,2 mmol), 8,4g C10-V3-OH (52,8 mmol) und 16,0 g Isophorondiisocyanat (72 mmol) zugegeben. Die Reaktionstemperatur wurde während der Zugabe und während der folgenden Reaktionszeit bei 110°C gehalten. Sobald kein Restisocyanat mehr nachweisbar war (dies war nach ca 45 Minuten Gesamtreaktionszeit der Fall), wurde die Temperatur bei 110°C gehalten und 134,9 g Dehydol 04 zugesetzt. Diese Mischung wurde bis zur Homogenität gerührt. Anschließend wurden unter Rühren 319,1 g VE-Wasser zugesetzt. Nachdem dass Produkt abgekühlt war, wurden ca. 660 g einer viskosen, klaren, leicht gelblichen Polymerlösung aus dem Reaktionsgefäß isoliert.

Der Trockenrückstand (zu dessen Bestimmung ca. 2 g der wie beschriebenen hergestellten Polymerlösung in einem 10 cm Aluschälchen bei 105°C über 1,5 h im Umlufttrockenschrank getrocknet wurden) betrug 51,6 Gew.-% und die Brookfield-Viskosität 5400 mPas (Brookfield RVT-Viskosimeter/Spindel 3/10 Upm/22°C).

Die Lackviskosität im Epprecht Viskosimeter betrug 260 mPas (Spindel C).

### Beispiel 3 (B3):

Im 1L-Vierhalskolben wurden 198 g (24 mmol) PEG 8000 vorgelegt. Es wurde zweimal evakuiert und mit Stickstoff belüftet. Anschließend wurde Vakuum angelegt und der Ansatz auf 100°C erhitzt. Bei dieser Temperatur wurde bei einem Vakuum von mindestens 10 mbar über einen Zeitraum von zwei Stunden entwässert. Dann wurde mit Stickstoff belüftet und im weiteren Verlauf die Schutzgasatmosphäre durch einen leichten Stickstoffstrom aufrechterhalten. Über die gesamte folgende Reaktionszeit wurde mit einer Rüherdrehzahl von 120 Upm gerührt. Danach wurden nacheinander 9,5 g C10-V3-OH (60 mmol) und 16,0 g Isophorondiisocyanat (72 mmol) zugegeben. Die Reaktionstemperatur wurde während der Zugabe und während der folgenden Reaktionszeit bei 110°C gehalten. Sobald kein Restisocyanat mehr nachweisbar war (dies war nach ca 60 Minuten Gesamtreaktionszeit der Fall), wurde die Temperatur bei 110°C gehalten und 132,0 g Dehydol 04 zugesetzt. Diese Mischung wurde bis zur Homogenität gerührt. Anschließend wurden unter Rühren 312,2 g VE-Wasser zugesetzt. Nachdem dass Produkt abgekühlt war, wurden ca. 630 g einer viskosen, klaren, leicht gelblichen Polymerlösung aus dem Reaktionsgefäß isoliert.

Der Trockenrückstand (zu dessen Bestimmung ca 2 g der wie beschriebenen hergestellten Polymerlösung in einem 10cm Aluschälchen bei 105°C über 1,5 h im Umlufttrockenschrank getrocknet wurden) betrug 51,1 Gew.-% und die Brookfield-Viskosität 8700 mPas (Brookfield RVT-Viskosimeter/Spindel 3/10 Upm/23°C).

Die Lackviskosität im Epprecht Viskosimeter betrug 420 mPas (Spindel C).

### Vergleichsbeispiel 1 (V1):

Im 1L-Vierhalskolben wurden 198 g (24 mmol) PEG 8000 (OHZ = 13,6) vorgelegt. Es wurde zweimal evakuiert und mit Stickstoff belüftet. Anschließend wurde Vakuum angelegt und der Ansatz auf 100°C erhitzt. Bei dieser Temperatur wurde bei einem Vakuum von mindestens 10 mbar über einen Zeitraum von zwei Stunden entwässert. Dann wurde mit Stickstoff belüftet und im weiteren Verlauf die Schutzgasatmosphäre durch einen leichten Stickstoffstrom aufrechterhalten. Über die gesamte folgende Reaktionszeit wurde mit einer Rüherdrehzahl von 120 Upm gerührt. Danach wurden nacheinander 11,40 g C10-V2-OH (72 mmol) und 16,0 g Isophorondiisocyanat (72 mmol) zugegeben. Die Reaktionstemperatur wurde während der Zugabe und während der folgenden Reaktionszeit bei 110°C gehalten. Sobald kein Restisocyanat mehr nachweisbar war (dies war nach ca. 60 Minuten Gesamtreaktionszeit der Fall), wurde die Temperatur bei 110°C gehalten und 132, 8g Dehydol 04 zugesetzt. Diese Mischung wurde bis zur Homogenität gerührt. Anschließend wurden unter Rühren 314, 0 g VE-Wasser zugesetzt. Nachdem dass Produkt abgekühlt war, wurden ca. 643 ,0 g einer viskosen, klaren, leicht gelblichen Polymerlösung aus dem Reaktionsgefäß isoliert.

Der Trockenrückstand (zu dessen Bestimmung ca. 2 g der wie oben beschrieben hergestellten Polymerlösung in einem 10 cm Aluschälchen bei 105°C über 1,5 h im Umlufttrockenschrank getrocknet wurden) betrug 50, 9 Gew.-% und die Brookfield-Viskosität 4850 mPas (Brookfield RVT-Viskosimeter/Spindel 3/10 Upm/23°C). Die Lackviskosität im Epprecht Viskosimeter betrug 200 mPas (Spindel C).

### Vergleichsbeispiel 2 (V2):

Im 1L-Vierhalskolben wurden 205,6 g (24 mmol) PEG 8000 (OHZ = 13,1) vorgelegt. Es wurde zweimal evakuiert und mit Stickstoff belüftet. Anschließend wurde Vakuum angelegt und der Ansatz auf 100°C erhitzt. Bei dieser Temperatur wurde bei einem Vakuum von mindestens 10 mbar über einen Zeitraum von zwei Stunden entwässert. Dann wurde mit Stickstoff belüftet und im weiteren Verlauf die Schutzgasatmosphäre durch einen leichten Stickstoffstrom aufrechterhalten. Über die gesamte folgende Reaktionszeit wurde mit einer Rüherdrehzahl von 120 Upm gerührt. Danach wurden nacheinander 10,1 g (69,9 mmol) Nonanol und 15,5 g Isophorondiisocyanat (69,9 mmol) zugegeben. Die Reaktionstemperatur wurde während der Zugabe und während der folgenden Reaktionszeit bei 110°C gehalten. Sobald kein Restisocyanat mehr nachweisbar war (dies war nach ca 45 Minuten Gesamtreaktionszeit der Fall), wurde die Temperatur bei 110°C gehalten und 839,6 g VE-Wasser zugesetzt. Diese Mischung wurde bis zur Homogenität gerührt. Nachdem dass Produkt abgekühlt war, wurden ca. 1003,7 g einer viskosen, klaren, leicht gelblichen Polymerlösung aus dem Reaktionsgefäß isoliert.

Der Trockenrückstand (zu dessen Bestimmung ca 2 g der wie beschriebenen hergestellten Polymerlösung in einem 10 cm Aluschälchen bei 105°C über 1,5 h im Umlufttrockenschrank getrocknet wurden) betrug 18,3 Gew.-% und die Brookfield-Viskosität 2250 mPas (Brookfield RVT-Viskosimeter/Spindel 3/10 Upm/22°C).

Die Lackviskosität im Epprecht Viskosimeter betrug 120 mPas (Spindel C).

### Vergleichsbeispiel 3 (V3):

Im lL-Vierhalskolben wurden 185,7 g (24 mmol) PEG 8000 (OHZ = 14,5) vorgelegt. Es wurde zweimal evakuiert und mit Stickstoff belüftet. Anschließend wurde Vakuum angelegt und der Ansatz auf 100°C erhitzt. Bei dieser Temperatur wurde bei einem Vakuum von mindestens 10 mbar über einen Zeitraum von zwei Stunden entwässert. Dann wurde mit Stickstoff belüftet und im weiteren Verlauf die Schutzgasatmosphäre durch einen leichten Stickstoffstrom aufrechterhalten. Über die gesamte folgende Reaktionszeit wurde mit einer Rüherdrehzahl von 120 Upm gerührt. Danach wurden nacheinander 12,0 g Exxal 13 (60 mmol) und 16,0 g Isophorondiisocyanat (72 mmol) zugegeben. Die Reaktionstemperatur wurde während der Zugabe und während der folgenden Reaktionszeit bei 110°C gehalten. Sobald kein Restisocyanat mehr nachweisbar war (dies war nach ca 60 Minuten Gesamtreaktionszeit der Fall), wurde die Temperatur bei 110°C gehalten und 127,2 g Dehydol 04 zugesetzt. Diese Mischung wurde bis zur Homogenität gerührt. Anschließend wurden unter Rühren 300,7 g VE-Wasser zugesetzt. Nachdem dass Produkt abgekühlt war, wurden ca. 635,8 g einer viskosen, klaren, leicht gelblichen Polymerlösung aus dem Reaktionsgefäß isoliert.

Der Trockenrückstand (zu dessen Bestimmung ca 2 g der wie beschriebenen hergestellten Polymerlösung in einem 10cm Aluschälchen bei 105°C über 1,5 h im Umlufttrockenschrank getrocknet wurden) betrug 49,3 Gew.-% und die Brookfield-Viskosität 10600 mPas (Brookfield RVT-Viskosimeter/Spindel 3/10 Upm/23°C).

Die Lackviskosität im Epprecht Viskosimeter betrug 220 mPas (Spindel C).

### Bestimmung der Dispersions-Verdickung

### Verdickungswirksamkeit:

0,2 g der gemäß Beispiel 1 erhaltenen Polymerlösung wurde mit 19,8 g einer Mischung JY 844 homogenisiert (die Mischung JY 844 war wie folgt zusammengesetzt: NeoCryl XK 98 (94,8 Gewichtsteile) Ammoniak 25% (0,2 Gewichtsteile), Butyldiglykol (2,3 Gewichtsteile), Dehydran 1513 (1,0 Gewichtsteile)). Die resultierende Zusammensetzung kam für 60 min bei 45°C in den Trockenschrank und wurde durch mehrmaliges Schütteln homogenisiert. Nach einer Standzeit von 20 Stunden bei 25 °C wurde nochmals geschüttelt.

Ganz analog wurden die gemäß den übrigen Beispielen (B2 und B3) und Vergleichsbeispielen (V1, V2 und V3) erhaltenen Polymerlösungen auf ihre Verdickungswirksamkeit untersucht. Die Ergebnisse aller Versuche sind in der nachfolgenden Tabelle 1 zusammengestellt.

**Tabelle 1**

| | | | **Dispersionsviskosität [mPas] JY-844** | | |
|---|---|---|---|---|---|
| **Polymer-Lösung nach Beispiel** | **Trockenrückstand** | **Produkt-viskosität** **[mPas]** | 0,5 s⁻¹ | 500 s⁻¹ | **ICI** ConeC,25°C/10000 |
| B1 | 51,3 % | 5600 | 6,723 | 1,408 | 220 |
| B2 | 18,3 % | 7650 | n.b. | 0,745 | 150 |
| B3 | 51,1 % | 8700 | 35,084 | 2,501 | 450 |
| V1 | 50,9 % | 4850 | 4,671 | 1,321 | 200 |
| V2 | 18,3 % | 2250 | n.b. | 0,511 | 120 |
| V3 | 49,3 % | 10600 | 34,169 | 2,323 | 220 |

## Patentansprüche

1. Polyurethane erhältlich durch Umsetzung von
(i) ein oder mehreren hydrophilen Polyolen, die pro Molekül mindestens zwei OH-Gruppen und mindestens zwei funktionelle Gruppen, die ausgewählt sind aus den Funktionen -O- (Ethergruppen) und -COO- (Estergruppen), wobei das Molgewicht dieser hydrophilen Verbindungen mindestens 300 beträgt,
(ii) ein oder mehreren Monoalkoholen mit insgesamt 8 bis 36 C-Atomen, mit der Maßgabe, dass es sich bei diesen Monoalkoholen um Guerbet-Alkohole (GA) handelt, die erhältlich sind, indem man als Ausgangsalkohole für die Guerbet-Reaktion zur Herstellung dieser Guerbet-Alkohole (GA) ausschließlich solche Monoalkohole mit 4 bis 18 C-Atomen einsetzt, die ausgewählt sind aus der Gruppe der primären und/oder sekundären Monoalkohole der Formel (MA), 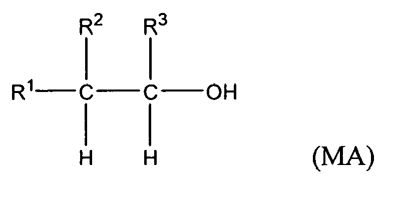 wobei gilt: (a) die Gesamtzahl der C-Atome der Verbindungen (MA) liegt im Bereich von 4 bis 18; (b) die Reste R¹, R² und R³ bedeuten Wasserstoff oder Alkylgruppen, die ― unabhängig voneinander ― linear oder verzweigt oder alicyclisch, gesättigt oder ungesättigt sein können; (c) die Reste R¹ und R² und/oder R¹ und R³ und/oder R² und R³ können miteinander verknüpft sein, d.h. Teil einer alicyclischen Substruktur sein; (d) die Verbindungen (MA) weisen mindestens eine Verzweigung auf, und
(iii) ein oder mehreren, mindestens difunktionellen, Isocyanaten.

2. Polyurethane nach Anspruch 1, wobei die Polyole (i) ausgewählt werden aus der Gruppe der Polyethylenglykole und der Polypropylenglykole.

3. Polyurethane nach Anspruch 1 oder 2, wobei die Monoalkohole (MA) gesättigte, mindestens einfach verzweigte Monoalkohole mit 5 bis 10 C-Atomen sind.

4. Polyurethane einem der Ansprüche 1 bis 3, wobei es sich bei dem Monoalkohol (MA) um 3-Methyl-butan-1-ol handelt.

5. Polyurethane einem der Ansprüche 1 bis 4, wobei man die Verbindungen (i), (ii) und (iii) in den Äqivalentverhältnissen OHᵢ₎ : ZHᵢᵢ) : NCOᵢᵢᵢ) von 1 : (1+x) : 2(1+y) miteinander umsetzt mit den Maßgaben, dass folgende Bedingungen gelten: x ist eine Zahl im Bereich von 0,05 bis 1,2 und y ist eine Zahl im Bereich von (0,2 bis 1,05) x und Äquivalentverhältnis NCOᵢᵢᵢ₎ (OHᵢ) + ZHᵢᵢ₎).

6. Polyurethane nach einem der Ansprüche 1 bis 5, wobei man das Isocyanat (iii) auswählt aus der Gruppe Isophorondiisocyanat und Tetramethylxyloldiisocyanat.

7. Polyurethane nach einem der Ansprüche 1 bis 7, wobei die Polyurethane durch Umsetzung die Verbindungen (i), (ii), (iii) und (iv) erhältlich sind, wobei es sich bei den Verbindungen (iv) um Polyole mit mindestens zwei OH-Gruppen pro Molekül handelt, die außer den OH-Gruppen keine weiteren funktionellen Gruppen enthalten.

8. Polyurethane nach Anspruch 7, wobei man Trimethylolpropan als Polyol (iv) einsetzt.

9. Polyurethane nach einem der Ansprüche 1 bis 8, wobei die Polyurethane durch Umsetzung die Verbindungen (i), (ii), (iii), (iv) und (v) erhältlich sind, wobei es sich bei den Verbindungen (v) um Monoalkohole handelt, die von den Verbindungen (ii) verschieden sind.

10. Polyurethane nach Anspruch 9, wobei man die Monoalkohole (v) auswählt aus der Gruppe der Guerbet-Alkohole mit 8 bis 24 C-Atomen, die höchstens zwei Verzweigungen pro Molekül aufweisen und der Oxoalkohole.

11. Verdicker-Konzentrate, enthaltend ein oder mehrere Polyurethane gemäß den Ansprüchen 1 bis 10 und Wasser.

12. Verdicker-Konzentrate nach Anspruch 11, wobei diese Konzentrate zusätzlich ein oder mehrere organische Lösungsmittel und/oder nichtionische Tenside vom Typ der Anlagerungsverbindungen von Ethylen- und/oder Propylenoxid an Fettalkohole mit 4 bis 18 C-Atomen enthalten.

13. Verwendung der Verdicker-Konzentrate gemäß den Ansprüchen 11 und 12 zur Verdickung von Dispersionsfarben.

14. Verwendung der Verdicker-Konzentrate gemäß den Ansprüchen 11 und 12 zur Verdickung von wäßrigen Dispersionen.

15. Verwendung nach Anspruch 14, wobei es sich bei den wässrigen Dispersionen um kosmetische Zubereitungen handelt.
